# EUROPEAN PATENT SPECIFICATION

(11) **EP 2 795 084 B1**
(45) Date of publication and mention of the grant of the patent: **05.02.2020**
(21) Application number: 12810186.2
(22) Date of filing: 14.12.2012
(51) Int. Cl.: F02C 6/18, F01K 23/10, F02C 3/34

(54) **CONTROL OF THE GAS COMPOSITION IN A GAS TURBINE POWER PLANT WITH FLUE GAS RECIRCULATION**
STEUERUNG DER GASZUSAMMENSETZUNG IN EINEM GASTURBINENKRAFTWERK MIT ABGASRÜCKFÜHRUNG
PROCÉDÉ DE FONCTIONNEMENT D'UNE CENTRALE À TURBINE À GAZ AVEC RECIRCULATION DES GAZ D'ÉCHAPPEMENT

(30) Priority: 19.12.2011 EP 11194242
(43) Date of publication of application: 29.10.2014
(73) Proprietor: Ansaldo Energia IP UK Limited, London W1G 9DQ (GB)
(72) Inventor: HÖVEL, Michael, CH-5426 Lengnau (CH)
(74) Representative: Bernotti, Andrea
(86) International application number: PCT/EP2012/075553
(87) International publication number: WO 2013/092411

(56) References cited:
- DE-A1-102011 102 720
- US-A1- 2009 157 230
- US-A1- 2009 229 263
- US-B2- 8 015 822

## Description

### TECHNICAL FIELD

The present invention relates to a method for operating a gas turbine power plant with exhaust gas recirculation and to a gas turbine power plant for carrying out the method.

### PRIOR ART

Recirculation of exhaust gases is a technology which can fundamentally be employed for a very wide range of applications in gas turbines. Thus, for example, exhaust gas recirculation is proposed for reducing NOx emissions (nitrogen oxide emissions) or for reducing the exhaust gas flow that has to be discharged. In the recirculation of exhaust gases of a gas turbine, a significant proportion of the exhaust gas is diverted from the overall exhaust gas flow and, typically after cooling and cleaning, is fed to the inlet mass flow of the gas turbine or the compressor, the recirculated exhaust gas flow being mixed with fresh air, and this mixture then being fed to the compressor.

By means of exhaust gas recirculation, it is advantageously possible to increase the carbon dioxide concentration in the exhaust gases and hence reduce the power losses and efficiency losses of power plants that have carbon dioxide removal.

Exhaust gas recirculation has also been proposed with the aim of reducing the oxygen concentration in the intake gases of gas turbines in order thereby to reduce NOx emissions.

A method for controlling an exhaust gas recirculation flow of a turbomachine, which is recirculated to the inlet of the turbomachine via an exhaust gas recirculation system, is described in US 7536252 B1, for example. In this method, the concentration of one component of an exhaust gas flow is adjusted by changing the exhaust gas recirculation ratio. Here, the exhaust gas recirculation ratio is defined as the ratio of the recirculated exhaust gas flow to the inlet flow of the turbomachine. US2009157230 and US2009229263 disclose methods and devices for controlling an exhaust gas recirculation (EGR) system.

Because of the large volume of exhaust gas lines, waste heat boilers, recirculation lines and fittings in the exhaust gas system, a simple feedback control system is slow and inaccurate.

### DESCRIPTION OF THE INVENTION

It is an object of the present disclosure to indicate a method for reliable operation of a gas turbine power plant with exhaust gas recirculation in which the content of at least one component of the operating medium is controlled. The disclosure furthermore relates to a gas turbine power plant which is suitable for carrying out the method.

A gas turbine power plant with exhaust gas recirculation comprises a gas turbine, a heat recovery steam generator and an exhaust gas divider, which divides the exhaust gases of the gas turbine power plant into a first exhaust gas flow for recirculation into the intake flow of the gas turbine and into a second exhaust gas flow for release to the environment, and an exhaust gas re-cooler. The gas turbine itself comprises a compressor, typically with adjustable compressor guide vanes, one or more combustion chamber(s) and one or more turbine(s). The exhaust gas divider is designed as a control element for controlling the first exhaust gas flow, or a control element is provided in a recirculation line through which the recirculated exhaust gases are fed to the compressor of the gas turbine. The control element for controlling the recirculation flow can be a flap or a valve, for example. However, it can also be an adjustable blower, for example.

The method for operating a gas turbine power plant with exhaust gas recirculation, a setpoint concentration of one component of the inlet gas and/or of the exhaust gas of the gas turbine is determined in a first step in accordance with the operating conditions of the gas turbine. In a second step, the position of the control element is adjusted in accordance with the setpoint/actual deviation in the concentration of the component. Here, the setpoint concentration of the one component is determined from the setpoint value of a closed control loop for a relevant operating variable of the combustion process in the combustion chamber of the gas turbine, a feedforward control value of the setpoint concentration and a correction value of the setpoint concentration.

"Inlet gas" is intended to mean the gas used in the gas turbine process before combustion. In practice, for example, the compressor inlet gas can be used as the inlet gas, and control can be exercised by means of the gas composition thereof. If no fluid, e.g. water for intercooling and power boosting, is introduced in the compressor, the gas composition in the compressor does not change. If a fluid is fed in, the change in the gas composition can be determined by way of a mass balance. As an alternative to the compressor inlet gas, a concentration of one component of a cooling air flow discharged from the compressor or the compressor outlet flow can be used, for example.

"Outlet gas" is intended to mean the gas used in the gas turbine process after combustion. In practice, for example, the exhaust gas can be used as the outlet gas, and control can be exercised by means of the gas composition thereof. If no fluid, e.g. a leakage flow from a desuperheater or cooling air diverted past the combustion process, is introduced in the turbine, there is no change in the gas composition in the turbine. If a fluid is fed in, a change in the gas composition can be determined by way of a mass balance, if necessary. As an alternative to the exhaust gas, a concentration of one component of the hot gases at the combustion chamber outlet can be used, for example.

The concentration of the one component of the inlet gas and/or of the outlet gas of the gas turbine is controlled in order to keep at least one operating variable relevant to combustion in a target range, e.g. a permissible or optimum range. In one embodiment, the setpoint concentration of the one component of the inlet gas and/or of the outlet gas of the gas turbine is determined in the closed control loop in accordance with the gas turbine load control, the combustion chamber pulsations, the NOx emissions, the unburned hydrocarbons (UHC), the measured concentration of the one component in the inlet gas and/or in the outlet gas of the gas turbine, or the ratio of carbon to hydrogen in the fuel. In this case, the one component is oxygen or carbon dioxide, for example.

In addition to direct control by means of a flap, a valve or an adjustable blower in the recirculation lines or ducts, the recirculation flow can also be controlled indirectly. For example, a control element, that is to say, for example, a valve, a flap or a blower, by means of which the pressure at the exhaust gas divider is influenced, can be provided in an exhaust gas line downstream of the exhaust gas divider. The recirculated exhaust gas flow increases with the pressure at the exhaust gas divider and can be controlled indirectly by means of the latter.

The concentration of the one component of the inlet gas or of the outlet gas of the gas turbine can be controlled by means of a closed control loop. Owing to the large volumes and dead times of the intake lines, of the exhaust gas lines, of the recirculation lines and of the waste heat boiler, however, this feedback control is slow, relatively inaccurate and requires large safety margins.

The aim of controlling the concentration of one component is typically to make this concentration approximate as accurately as possible to a setpoint value at which the process runs in a particularly advantageous manner.

In the case of recirculation of exhaust gases for NOx reduction, for example, the oxygen concentration in the inlet gases or the residual oxygen concentration of the outlet gases should be controlled as accurately as possible. On the one hand, an excessive oxygen concentration means that the positive effect of recirculation falls, i.e. the high oxygen concentration allows locally intense combustion and leads to temperature peaks and hence to increasing NOx emissions from the gas turbine. On the other hand, there is the risk, in the case of an excessively low oxygen concentration, of incomplete combustion, which leads to high CO emissions (carbon monoxide) and UHC emissions (unburned hydrocarbons).

In the case of recirculation of exhaust gases in a process with CO2 removal (carbon dioxide) from the exhaust gases, there is a need, on the one hand, to keep the CO2 concentration in the exhaust gases as high as possible in order to allow an effective removal process. On the other hand, the oxygen concentration in the intake gases falls with an increasing CO2 concentration, and this can lead, in turn, to incomplete combustion.

For a good process, it is therefore advantageous to follow the setpoint variable as quickly and accurately as possible. To this end and depending on the operating conditions of the gas turbine and on transient changes in the operating conditions of the gas turbine, a control loop in which a setpoint variable is formed is supplemented by formation of a feedforward control value of the setpoint variable. The feedforward control values are the result of calculations, simulations or tests and have been determined for specific operating conditions or transient changes. In practice, however, the behavior of the system deviates from models or idealized calculations, and therefore the feedforward control typically does not lead directly to optimum results. In order to adapt the feedback control to the actual results in the system and to adapt the behavior thereof, a third value, a correction value of the setpoint variable, is also determined.

The setpoint concentration of the component is determined from all three values, i.e. the setpoint concentration of the control loop, the setpoint concentration of the feedforward control and the correction value of the setpoint concentration.

Typically, the setpoint concentration is simply the sum of the setpoint concentration of the control loop, the setpoint concentration of the feedforward control and the correction value of the setpoint concentration.

However, the setpoint concentration can also be determined as an average or as weighted averages, for example.

In another embodiment of the method, the setpoint value of the control element is determined from a setpoint value of a closed control loop for the control element, a feedforward control value of the setpoint value of the control element and a correction value of the setpoint value of the control element. The setpoint value of the control element can be a flap or valve position, for example. When using an adjustable blower, it can be the rotational speed or the guide vane position of a blower of this kind.

In another embodiment of the method, the setpoint value of the control element is determined in the closed control loop in accordance with at least one of the following measured variables: the exhaust gas recirculation ratio, the intake mass flow of the compressor, the fresh air mass flow, the exhaust gas mass flow, the concentration of one component in the inlet gas and/or in the outlet gas of the gas turbine.

In one embodiment of the method, the feedforward control values and/or the correction values are stored for discrete values in one or more matrices, and interpolation is carried out between these values.

Moreover, a working characteristic for the feedforward control of the setpoint concentration can be predetermined. For adaptation to the actual system and the operating conditions thereof, this working characteristic can be adapted by a correction value of the setpoint concentration.

Accordingly, a working characteristic for the feedforward control of the setpoint concentration of the control element can be predetermined, and this working characteristic can be shifted by a correction value of the setpoint value.

In addition to simple shifting, another embodiment specifies that the slope of the working characteristic for the feedforward control of the setpoint concentration and/or of the setpoint value of the control element is adapted by means of a correction value of the setpoint concentration and/or a correction value of the setpoint value.

In yet another embodiment, the shape of the working characteristic for the feedforward control of the setpoint concentration and/or of the setpoint value of the control element is adapted by means of a correction value of the setpoint concentration and/or a correction value of the setpoint value.

In one embodiment of the method, which is used for controlling low-NOx combustion for example, the oxygen concentration of the inlet gas, of the outlet gas of the gas turbine or the oxygen concentration of the inlet gas and the oxygen concentration of the outlet gas of the gas turbine is used as a controlled variable.

In one embodiment of the method, which is used, for example, when operating with subsequent CO2 removal, the CO2 concentration of the inlet gas, of the outlet gas of the gas turbine or the CO2 concentration of the inlet gas and the CO2 concentration of the outlet gas of the gas turbine are used as a controlled variable.

Since the CO2 concentration is approximately inversely proportional to the oxygen concentration, these can be used virtually interchangeably or in combination for control purposes.

According to the method, the exhaust gas flow is passed through a waste heat boiler, in which the usable heat thereof is removed.

According to one embodiment of the method, it is furthermore possible for the second exhaust gas flow, for release to the environment, to be fed to a carbon dioxide removal system. In this carbon dioxide removal system, carbon dioxide is separated from the exhaust gases and taken off for further use. Exhaust gas low in carbon dioxide is released to the environment.

In addition to the method, the subject matter of the disclosure includes a gas turbine power plant with exhaust gas recirculation, which comprises a gas turbine having at least one sensor for measuring the concentration of one component of the inlet gas and/or of the outlet gas of the gas turbine, a controller, a heat recovery steam generator and an exhaust gas divider, which divides the exhaust gases of the gas turbine power plant into a first exhaust gas flow for recirculation into an intake flow of the gas turbine and into a second exhaust gas flow for release to the environment, and a control element for controlling the first exhaust gas flow, and an exhaust gas re-cooler. Here, the gas turbine power plant is characterized in that the controller comprises three controller levels for determining a setpoint concentration of one component of the inlet gas and/or of the exhaust gas of the gas turbine.

The controller levels are as follows:
1. a closed control loop for the setpoint concentration,
2. a feedforward control for the setpoint concentration, and
3. a feedback circuit, by means of which the setpoint values of the feedforward control are corrected in accordance with the actual operating behavior of the gas turbine power plant.

In one embodiment of the gas turbine power plant, the controller of the gas turbine power plant comprises a block for determining a setpoint concentration and a subsequent block for determining the setpoint position of the control element. Here, the block for determining the setpoint position of the control element is connected to the output signal of the block for determining the setpoint concentration. Furthermore, the gas turbine power plant comprises at least one measurement of an operating parameter of the gas turbine power plant. Moreover, the gas turbine power plant can comprise an online measurement of the fuel composition, and this measurement is connected to the controller.

In another embodiment of the gas turbine power plant, the gas turbine power plant comprises a pulsation measurement in the combustion chamber(s), which is connected to the controller.

For good feedforward control, it is advantageous to store as comprehensive a matrix of operating states as possible in the controller, covering the entire operating range and possible transient changes. In particular, the target values for various ambient conditions, i.e. ambient temperatures, ambient pressure, relative atmospheric humidity, various load points, i.e. idling, part load and full load, should be predetermined. The feedforward control is furthermore advantageously dependent on the compressor intake mass flow or on an adjustable inlet vane, on the hot gas temperature, the turbine inlet temperature or an equivalent temperature, on the outlet gas composition, the composition of the recirculated gases and the composition of the combustion gas.

For control of transient changes, the dependence on the load gradients, in particular, should be taken into account, i.e. values for a typically slow standard load gradient, for rapid load gradients, for emergency relief with a very high gradient, and for partial and complete load shedding should be predetermined. Moreover, values for operation in the case of frequency support can be predetermined.

Since the controller compares the specified target with the actual behavior of the gas turbine and compensates for the difference by means of the correction values, it is possible to achieve rapid, accurate control with relatively inaccurate measurements, especially of the difficult-to-measure intake and exhaust gas flows.
Continuous comparison between the specified target and the actual behavior of the gas turbine furthermore allows compensation of aging effects, e.g. a decrease in the compressor intake flow due to soiling.

All the advantages explained can be employed not only in the respectively indicated combinations but also in other combinations or in isolation without exceeding the scope of the invention. For example, instead of recirculation of exhaust gases into the intake flow of the compressor, the plant can have a compressor for fresh air and a compressor for recirculated exhaust gases, and the fresh or recirculated gases can be fed to the process proper only after compression or partial compression.

Instead of measurement of the compressor inlet gases, measurement in the compressor or at the compressor outlet can furthermore be employed. The composition of the gas typically remains unchanged in the compressor as long as no substances, e.g. water for intercooling, are introduced into the compressor. If additional fluids are fed to the compressor in addition to the compressor inlet gas, the composition at the outlet can be approximated by means of a mass balance.

Various closed-loop controllers, such as two-position controllers, proportional controllers, integral or IP controllers, are known to those skilled in the art for implementing the control loops for the concentration of one component and for implementing the control element.

### BRIEF DESCRIPTION OF THE DRAWINGS

Preferred embodiments of the invention are described below with reference to the drawings, which serve merely for illustration and are not to be interpreted as restrictive. The drawings show, by way of example:
- Fig. 1: a schematic representation of a gas turbine power plant with exhaust gas recirculation;
- Fig. 2: a schematic representation of a gas turbine power plant having a gas turbine with sequential combustion and exhaust gas recirculation;
- Fig. 3: a schematic representation of a gas turbine power plant having a gas turbine with exhaust gas recirculation and a carbon dioxide removal system;
- Fig. 4: an illustrative control loop in schematic form.

### DESCRIPTION OF THE PREFERRED EMBODIMENTS

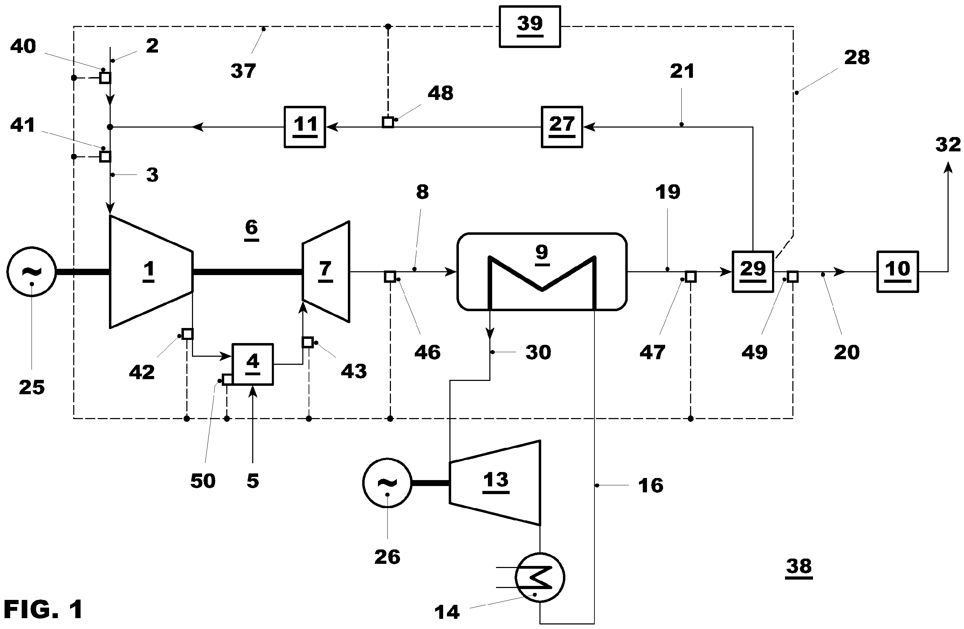

Fig. 1 shows, in schematic form, the essential elements of a gas turbine power plant 38 according to the invention. The gas turbine 6 comprises a compressor 1, and the combustion air compressed therein is fed to a combustion chamber 4 and used there with fuel 5 for combustion. The hot combustion gases are then expanded in a turbine 7. The useful energy produced in the turbine 7 is then converted into electrical energy by means of a first generator 25 arranged on the same shaft, for example.

In order to make optimum use of the energy that still remains in the hot exhaust gases 8 emerging from the turbine 7, said exhaust gases are used in a heat recovery steam generator 9 (HRSG) to produce live steam 30 for a steam turbine 13 or for other systems. The useful energy produced in the steam turbine 13 is converted into electrical energy by means of a second generator 26 arranged on the same shaft, for example. In the example, the steam circuit is represented in simplified and merely schematic form with a condenser 14 and a feed water line 16. Various pressure stages, feed water pumps etc. are not shown since they are not part of the subject matter of the invention.

Downstream of the heat recovery steam generator 9, the exhaust gases from the heat recovery steam generator 9 are divided in an exhaust gas divider 29 into a first partial exhaust gas flow 21 and a second partial exhaust gas flow 20. The first partial exhaust gas flow 21 is recirculated into the intake line of the gas turbine 6 and mixed there with ambient air 2. The second partial exhaust gas flow 20, which is not recirculated, is released to the environment via a flue 32. In order to overcome the pressure losses of the exhaust gas line and as a further means of controlling the division of the exhaust gas flows, an exhaust gas blower 11 or an adjustable exhaust gas blower 11 can optionally be provided.

In operation with recirculation, the recirculated exhaust gas flow 21 is cooled to somewhat above (typically 5° C to 20° C above) ambient temperature in an exhaust gas re-cooler 27, which can be fitted with a condenser. The booster or the exhaust gas blower 11 for the recirculation flow 21 can be arranged downstream of this exhaust gas re-cooler 27. The recirculated exhaust gas flow 21 is mixed with the ambient air 2 before the mixture is fed to the gas turbine 6 as an intake flow via the compressor inlet 3.

In the example shown, the exhaust gas divider 29 is embodied as a control element, which makes it possible to control the recirculation mass flow or recirculation ratio. Data exchange on the setpoint and the actual position of the exhaust gas divider 29 with the controller 39 takes place via the signal line 28. With measurement 40, inlet conditions of the ambient air 2 drawn in, such as the temperature, pressure, humidity, mass flow, air composition and, in particular, the oxygen concentration or the carbon dioxide concentration, can be determined. With the measurement 41, inlet conditions of the inlet gases 3 to the compressor 1, such as the temperature, pressure, humidity, mass flow, gas composition and, in particular, the oxygen concentration or the carbon dioxide concentration, can be determined.

With measurements 42 and 43, inlet and outlet conditions of the combustion chamber 4, such as quantity, gas composition and, in particular, the oxygen concentration or the carbon dioxide concentration, can be determined.

With measurements 46 to 49, the exhaust gas conditions of the gas turbine 6 and the conditions in the various exhaust gas flows of the gas turbine, such as quantity, gas composition and, in particular, the oxygen concentration or the carbon dioxide concentration, can be determined.

Moreover, the combustion chamber pulsations can be determined with measurement 50.

The measured values are transmitted to the controller 39 via the signal line 37. For the sake of clarity, none of the other conventional signal lines, sensors and control elements are shown since they do not affect the essence of the invention. Depending on the embodiment of the method, however, they are necessary in order, for example, to verify or indirectly determine the measured values by means of a mass balance or a thermal balance.

In a first step, the controller determines the setpoint concentration C_{c} for at least one component of the inlet gas 3 or of the exhaust gas flow 8 of the gas turbine in accordance with at least one of the measured values. In a second step, the controller determines a setpoint value for the position of the exhaust gas divider 29 in accordance with the setpoint concentration C_{c}.

Instead of an absolute setpoint position, the controller can also determine a change in the setpoint value for the position of the exhaust gas divider 29 and exercise control by means of relative changes. Moreover, the actual position can be taken into account in determining the setpoint position.

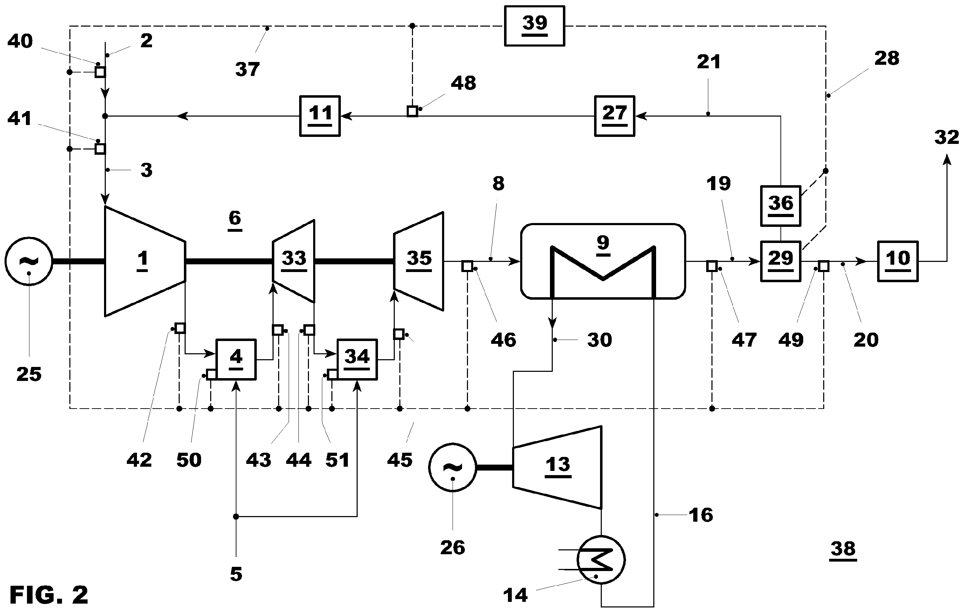

The example in figure 1 shows a gas turbine 6 with a single combustion chamber 4. The invention can also be employed without restriction to gas turbines with sequential combustion, of the kind known from EP0718470, for example. In figure 2, an example of a gas turbine power plant 38 with sequential combustion and exhaust gas recirculation is shown schematically. In the case of this gas turbine, the first combustion chamber 4 is followed by a high-pressure turbine 33. In the second combustion chamber 34, more fuel 5 is fed to the outlet gases of the high-pressure turbine 33, which have been partially expanded, thereby producing work, and is burnt. The hot combustion gases of the second combustion chamber 34 are further expanded in the low-pressure turbine 35, thereby producing work. Use of the waste heat and recirculation are accomplished in a manner similar to the illustrative embodiment in figure 1. For controlling and shutting off the recirculation flow, a control element 36 is provided in addition to the exhaust gas divider 29, which can be of nonadjustable design. This control element 36 is likewise connected to the controller 39 by signal lines 28.

Inlet and outlet conditions of the first combustion chamber 4 can be determined with measurements 42 and 43, and inlet and outlet conditions of the second combustion chamber 34 can be determined with measurements 44 and 45. In addition to the pulsation measurement for the first combustion chamber 50, a pulsation measurement for the second combustion chamber 51 is shown.

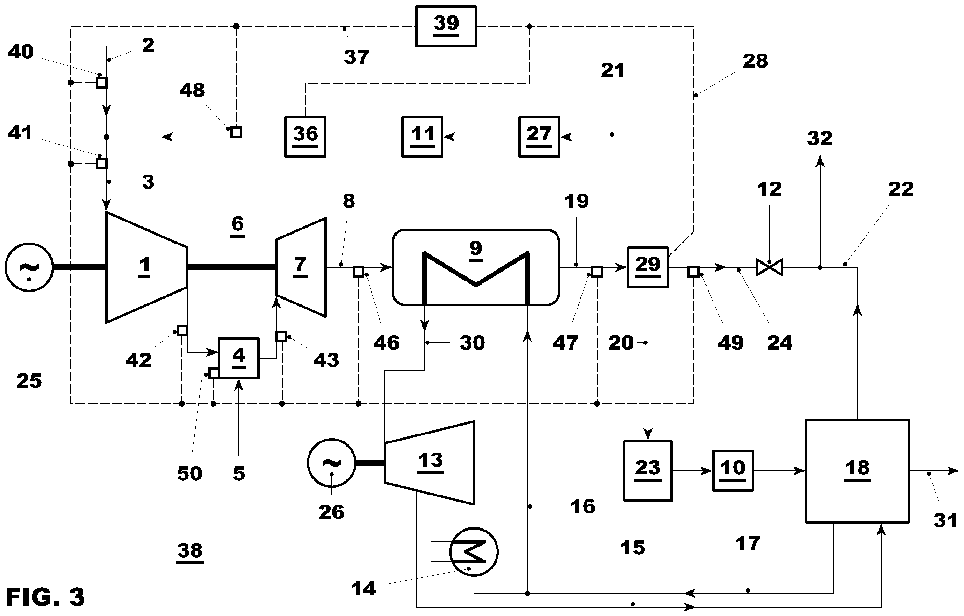

Based on figure 1, figure 3 additionally shows a carbon dioxide removal system 18. The second partial exhaust gas flow 20, which is not recirculated, is typically cooled further in an exhaust gas re-cooler 23 and fed to the carbon dioxide removal system 18. Exhaust gases 22 low in carbon dioxide are released from the latter to the environment via a flue 32. In order to overcome the pressure losses of the carbon dioxide removal system 18 and of the exhaust gas line, an exhaust gas blower 10 can be provided. The carbon dioxide 31 removed in the carbon dioxide removal system 18 is typically compressed in a compressor (not shown) and taken off for storage or further treatment. The carbon dioxide removal system 18 is supplied with steam, typically medium- or low-pressure steam diverted from the steam turbine 13 via a steam extraction system 15. The steam is fed back to the steam circuit after releasing energy in the carbon dioxide removal system 18. In the example shown, the steam is condensed and fed to the feed water via the condensate recirculation line 17.

The second partial exhaust gas flow 20 can also be fed directly to the flue 32 as an exhaust gas bypass flow 24 via an exhaust gas bypass, which comprises a bypass flap or valve 12.

In addition to the illustrative embodiment shown in figure 1, the exhaust gas recirculation system of the example shown in figure 3 furthermore comprises a separate control element 36 for controlling the recirculation flow.

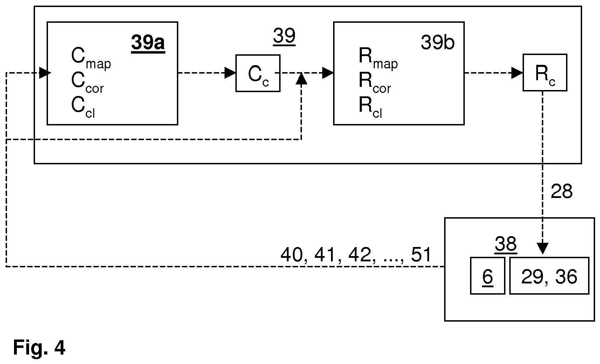

Figure 4 shows an illustrative control loop in schematic form. The measured values 40 to 51 of the gas turbine power plant 38 are transmitted to the controller 39. In a first block 39a, the setpoint value of the concentration of one gas component C_{c} is determined, taking into account the measured values 40 to 51, from the setpoint value of the concentration of the gas component of a closed control loop C_{cl}, the feedforward control value of the setpoint concentration of one gas component Cₘₐₚ and the correction value of the setpoint concentration of one gas component C_{cor}.

In a second block 39b, the setpoint value of the control element R_{c} is determined, taking into account the measured values 40 to 51 and the setpoint value of the concentration of one gas component C_{c}, from the setpoint value of the control element of a closed control loop R_{cl}, the feedforward control value of the setpoint value of the control element Rₘₐₚ and the correction value of the setpoint value of the control element R_{cor}.

### LIST OF REFERENCE SIGNS

- 1: compressor
- 2: ambient air
- 3: compressor inlet gas
- 4: combustion chamber, first combustion chamber
- 5: fuel
- 6: gas turbine
- 7: turbine
- 8: hot exhaust gases of the gas turbine
- 9: heat recovery steam generator (HRSG)
- 10: exhaust gas blower for the second partial exhaust gas flow (to the carbon dioxide removal system or flue)
- 11: exhaust gas blower for the first partial exhaust gas flow (exhaust gas recirculation)
- 12: bypass flap or valve
- 13: steam turbine
- 14: condenser
- 15: steam extraction system for the carbon dioxide removal system
- 16: feed water line
- 17: condensate recirculation line
- 18: carbon dioxide removal system
- 19: exhaust gas from the heat recovery steam generator
- 20: second partial exhaust gas flow (exhaust gas line to the carbon dioxide removal system)
- 21: first partial exhaust gas flow (exhaust gas recirculation)
- 22: exhaust gas low in carbon dioxide
- 23: exhaust gas re-cooler (for the second partial exhaust gas flow)
- 24: exhaust gas bypass flow to the flue
- 25: first generator
- 26: second generator
- 27: exhaust gas re-cooler (for the first partial exhaust gas flow)
- 28: signal line to the control element (29, 36)
- 29: exhaust gas divider
- 30: live steam
- 31: carbon dioxide removed
- 32: flue
- 33: high-pressure turbine
- 34: second combustion chamber
- 35: low-pressure turbine
- 36: control element
- 37: signal line
- 38: gas turbine power plant
- 39: controller
- 40-49: measurement
- 50: pulsation measurement in the first combustion chamber
- 51: pulsation measurement in the second combustion chamber

- C_{c}: setpoint value of the concentration of one gas component
- C_{cl}: setpoint of the concentration of one gas component of a control loop
- Cₘₐₚ: feedforward control value of the setpoint concentration of one gas component
- C_{cor}: correction value of the setpoint concentration of one gas component
- R_{c}: setpoint value of the control element
- R_{cl}: setpoint value of the control element in a closed control loop
- Rₘₐₚ: feedforward control value of the control element
- R_{cor}: correction value of the control element

## Claims

1. A method for operating a gas turbine power plant (38) with exhaust gas recirculation, which comprises a gas turbine (6), a controller (39), a heat recovery steam generator (9) and an exhaust gas divider (29); wherein the heat recovery steam generator (9) is configured to remove the usable heat from the exhaust gas flow (8) passing through it; downstream of the heat recovery steam generator (9), the exhaust gas divider (29) divides the exhaust gases (8, 19) of the gas turbine power plant into a first partial exhaust gas flow (21) for recirculation into an intake flow of the gas turbine (6) and into a second partial exhaust gas flow (20, 24) for release to the environment, and a control element (11, 29) for controlling the first exhaust gas flow (21), and an exhaust gas re-cooler (27), wherein
a setpoint concentration of one component (C_{c}) of the inlet gas (3) and/or of the exhaust gas of the gas turbine (8, 19, 20, 21, 24) is determined in a first step in accordance with the operating conditions of the gas turbine (6), the position of the control element (11, 29) is adjusted in a second step in accordance with the setpoint/actual deviation in the concentration of the component,
**characterized in that** the setpoint concentration of the one component (C_{c}) is determined from the setpoint value of the concentration of one gas component (C_{cl}) from a control loop for an operating variable relevant to combustion in the gas turbine (6), a feedforward control value of the setpoint concentration of the gas component (Cₘₐₚ) and a correction value of the setpoint concentration (C_{cor}) of the gas component.

2. The method as claimed in claim 1, **characterized in that** the setpoint concentration (C_{cl}) of the one component of the inlet gas (3) and/or of the exhaust gas of the gas turbine (8, 19, 20, 21, 24) is determined in the closed control loop in accordance with one or more of the following operating variables relevant to combustion in the gas turbine (6), namely
the combustion chamber pulsations, the NOx emissions, the unburned hydrocarbons (UHC), the measured concentration of the one component in the inlet gas (3) and/or in the exhaust gas (8, 19, 20, 21, 24) of the gas turbine (6) and/or the ratio of carbon to hydrogen in the fuel (5).

3. The method as claimed in claim 1 or 2, **characterized in that** the setpoint value of the control element (R_{c}) is determined from a setpoint value of a closed control loop (R_{cl}) for the control element (11, 29), a feedforward control value of the setpoint value of the control element (Rₘₐₚ) for controlling the recirculated first exhaust gas flow and a correction value (R_{cor}) of the setpoint value of the control element (11, 29).

4. The method as claimed in one of claims 1 to 3, **characterized in that** the setpoint value of the control element (R_{cl}) is determined in the closed control loop in accordance with one or more of
the exhaust gas recirculation ratio, the inlet flow of the compressor (3), the ambient air flow (2) and the exhaust gas flow (8, 19, 20, 21, 24).

5. The method as claimed in one of claims 1 to 4, **characterized in that** at least one of the feedforward control values of the setpoint concentration (Cₘₐₚ) and of the setpoint value of the control element (Rₘₐₚ) and/or at least one of the correction values of the setpoint concentration (C_{cor}) and of the setpoint value of the control element (R_{cor}) is stored for discrete values in a matrix, and interpolation is carried out between these values.

6. The method as claimed in one of claims 1 to 5, **characterized in that** a working characteristic for the feedforward control of the setpoint concentration (Cₘₐₚ) and/or of the setpoint value of the control element (Rₘₐₚ) is predetermined, and this working characteristic is shifted by a correction value of the setpoint concentration (C_{cor}) and/or by a correction value of the setpoint value (R_{cor}).

7. The method as claimed in claim 6, **characterized in that** the slope of the working characteristic for the feedforward control of the setpoint concentration (Cₘₐₚ) and/or of the setpoint value of the control element (Rₘₐₚ) is adapted by means of a correction value of the setpoint concentration (C_{cor}) and/or a correction value of the setpoint value (R_{cor}).

8. The method as claimed in claim 6 or 7, **characterized in that** the shape of the working characteristic for the feedforward control of the setpoint concentration (Cₘₐₚ) and/or of the setpoint value of the control element (Rₘₐₚ) is adapted by means of a correction value of the setpoint concentration (C_{cor}) and/or a correction value of the setpoint value (R_{cor}).

9. The method as claimed in one of claims 1 to 8, **characterized in that** the correction value of the setpoint concentration (C_{cor}) and/or the correction value of the setpoint value of the control element (R_{cor}) is formed in accordance with past control deviations.

10. The method as claimed in one of claims 1 to 9, **characterized in that** the CO2 concentration and/or the oxygen concentration of the inlet gas (3) and/or of the exhaust gas of the gas turbine (8, 19, 20, 21, 24) is used as a controlled variable.

11. The method as claimed in one of claims 1 to 10, **characterized in that**, before being released to the environment, the second exhaust gas flow (20) is fed to a carbon dioxide removal system (18), exhaust gases (22) low in carbon dioxide are released to the environment by said carbon dioxide removal system (18), and carbon dioxide (31) is taken off for further use.

12. A gas turbine power plant (38) with exhaust gas recirculation, which comprises a gas turbine (6), a controller (39), a heat recovery steam generator (9) and an exhaust gas divider (29); wherein the heat recovery steam generator (9) is configured to remove the usable heat from the exhaust gas flow (8) passing through it; downstream of the heat recovery steam generator (9), the exhaust gas divider (29) divides the exhaust gases (19) of the gas turbine power plant (38) into a first exhaust gas flow (21) for recirculation into an intake flow of the gas turbine (6) and into a second exhaust gas flow (20) for release to the environment, and a control element (11, 29) for controlling the first exhaust gas flow (21), and an exhaust gas re-cooler (27),
wherein at least one sensor (40, 41,..., 49) for measuring the concentration of one component of the inlet gas (3) and/or of the hot working gas and/or of the exhaust gas of the gas turbine (8, 19, 20, 21, 24) is provided,
**characterized in that** the controller (39) comprises three controller levels for determining a setpoint concentration (C_{c}) of the one component, wherein the first controller level comprises a closed control loop for the setpoint concentration (C_{c}) of the one component, the second controller level comprises a feedforward control for the setpoint concentration (C_{c}) of the one component, and the third controller level comprises a feedback circuit, by means of which the setpoint values of the feedforward control are corrected in accordance with the actual operating behavior of the gas turbine power plant.

13. The gas turbine power plant (38) as claimed in claim 12, **characterized in that** the controller (39) comprises a block for determining a setpoint concentration (C_{c}) and a subsequent block for determining a setpoint position (R_{c}) of the control element (11, 29), wherein the block for determining the setpoint position (R_{c}) of the control element (11, 29) is connected to the output signal of the block for determining the setpoint concentration (C_{c}), and comprises at least one measurement (41, 42, ..., 49) of an operating parameter of the gas turbine power plant (38) and/or an online measurement of the fuel composition, and this measurement is connected to the controller (39).

14. The gas turbine power plant (38) as claimed in claim 12 or 13, **characterized in that** it comprises a pulsation measurement (50, 51) in a combustion chamber (4, 34), which is connected to the controller (39).

## Patentansprüche

1. Verfahren zum Betreiben eines Gasturbinenkraftwerks (38) mit Abgasrückführung, das eine Gasturbine (6), eine Steuervorrichtung (39), einen Wärmerückgewinnungsdampferzeuger (9) und einen Abgasteiler (29) umfasst; wobei der Wärmerückgewinnungsdampferzeuger (9) dafür konfiguriert ist, die nutzbare Wärme aus dem durch ihn strömenden Abgasstrom (8) zu entnehmen; wobei stromabwärts des Wärmerückgewinnungsdampferzeugers (9) der Abgasteiler (29) die Abgase (8, 19) des Gasturbinenkraftwerks in einen ersten Teilabgasstrom (21) zur Rückführung in einen Einlassstrom der Gasturbine (6) und in einen zweiten Teilabgasstrom (20, 24) zur Freisetzung in die Umgebung teilt, sowie ein Steuerelement (11, 29) zur Steuerung des ersten Abgasstroms (21) und einen Abgasnachkühler (27), wobei
eine Sollwertkonzentration einer Komponente (C_{c}) des Einlassgases (3) und/oder des Abgases der Gasturbine (8, 19, 20, 21, 24) in einem ersten Schritt entsprechend den Betriebsbedingungen der Gasturbine (6) bestimmt wird, die Position des Steuerelements (11, 29) in einem zweiten Schritt entsprechend der Soll-Ist-Abweichung in der Konzentration der Komponente eingestellt wird,
**dadurch gekennzeichnet, dass** die Sollwertkonzentration der einen Komponente (C_{c}) aus dem Sollwert der Konzentration einer Gaskomponente (C_{cl}) von einem Regelkreis für eine für die Verbrennung in der Gasturbine (6) relevante Betriebsgröße, einem Feedforward-Steuerwert der Sollwertkonzentration der Gaskomponente (Cₘₐₚ) und einem Korrekturwert der Sollwertkonzentration (C_{cor}) der Gaskomponente bestimmt wird.

2. Verfahren nach Anspruch 1, **dadurch gekennzeichnet, dass** die Sollwertkonzentration (C_{cl}) der einen Komponente des Einlassgases (3) und/oder des Abgases der Gasturbine (8, 19, 20, 21, 24) im geschlossenen Regelkreis entsprechend einer oder mehreren der folgenden für die Verbrennung in der Gasturbine (6) relevanten Betriebsgrößen bestimmt wird, nämlich
den Brennkammerpulsationen, den NOx-Emissionen, den unverbrannten Kohlenwasserstoffen (UHC), der gemessene Konzentration der einen Komponente im Einlassgas (3) und/oder im Abgas (8, 19, 20, 21, 24) der Gasturbine (6) und/oder dem Verhältnis von Kohlenstoff zu Wasserstoff im Brennstoff (5).

3. Verfahren nach Anspruch 1 oder 2, **dadurch gekennzeichnet, dass** der Sollwert des Steuerelements (R_{c}) aus einem Sollwert eines geschlossenen Regelkreises (R_{cl}) für das Steuerelement (11, 29), einem Feedforward-Steuerwert des Steuerelements (Rₘₐₚ) zum Steuern des rückgeführten ersten Abgasstroms und einem Korrekturwert (R_{cor}) des Sollwerts des Steuerelements (11, 29) bestimmt wird.

4. Verfahren nach einem der Ansprüche 1 bis 3, **dadurch gekennzeichnet, dass** der Sollwert des Steuerelements (R_{cl}) im geschlossenen Regelkreis entsprechend einem oder mehreren aus den Abgasrückführungsverhältnissen, dem Einlassstrom des Verdichters (3), dem Umgebungsluftstrom (2) und dem Abgasstrom (8, 19, 20, 21, 24) bestimmt wird.

5. Verfahren nach einem der Ansprüche 1 bis 4, **dadurch gekennzeichnet, dass** wenigstens einer der Feedforward-Steuerwerte der Sollwertkonzentration (Cₘₐₚ) und des Sollwerts des Steuerelements (Rₘₐₚ) und/oder wenigstens einer der Korrekturwerte der Sollwertkonzentration (C_{cor}) und des Sollwerts des Steuerelements (R_{cor}) für diskrete Werte in einer Matrix gespeichert wird und zwischen diesen Werten interpoliert wird.

6. Verfahren nach einem der Ansprüche 1 bis 5, **dadurch gekennzeichnet, dass** eine Arbeitscharakteristik für die Feedforward-Steuerung der Sollwertkonzentration (Cₘₐₚ) und/oder des Sollwerts des Steuerelements (Rₘₐₚ) vorgegeben ist und diese Arbeitscharakteristik um einen Korrekturwert der Sollwertkonzentration (C_{cor}) und/oder um einen Korrekturwert des Sollwerts (R_{cor}) verschoben wird.

7. Verfahren nach Anspruch 6, **dadurch gekennzeichnet, dass** die Steigung der Arbeitscharakteristik für die Feedforward-Steuerung der Sollwertkonzentration (Cₘₐₚ) und/oder des Sollwerts des Steuerelements (Rₘₐₚ) mittels eines Korrekturwerts der Sollwertkonzentration (C_{cor}) und/oder eines Korrekturwerts des Sollwerts (C_{cor}) angepasst wird.

8. Verfahren nach Anspruch 6 oder 7, **dadurch gekennzeichnet, dass** die Form der Arbeitscharakteristik für die Feedforward-Steuerung der Sollwertkonzentration (Cₘₐₚ) und/oder des Sollwertes des Steuerelements (Rₘₐₚ) mittels eines Korrekturwertes der Sollwertkonzentration (C_{cor}) und/oder eines Korrekturwertes des Sollwertes (R_{cor}) angepasst wird.

9. Verfahren nach einem der Ansprüche 1 bis 8, **dadurch gekennzeichnet, dass** der Korrekturwert der Sollwertkonzentration (C_{cor}) und/oder der Korrekturwert des Sollwerts des Steuerelements (R_{cor}) entsprechend den vergangenen Regelabweichungen gebildet wird.

10. Verfahren nach einem der Ansprüche 1 bis 9, **dadurch gekennzeichnet, dass** die CO2-Konzentration und/oder die Sauerstoffkonzentration des Einlassgases (3) und/oder des Abgases der Gasturbine (8, 19, 20, 21, 24) als eine Regelgröße verwendet wird.

11. Verfahren nach einem der Ansprüche 1 bis 10, **dadurch gekennzeichnet, dass** der zweite Abgasstrom (20) vor der Freisetzung in die Umgebung einem Kohlendioxidabscheidesystem (18) zugeführt wird, kohlendioxidarme Abgase (22) durch das Kohlendioxidabscheidesystem (18) an die Umgebung abgegeben werden und Kohlendioxid (31) zur weiteren Verwendung entnommen wird.

12. Gasturbinenkraftwerk (38) mit Abgasrückführung, das eine Gasturbine (6), eine Steuervorrichtung (39), einen Wärmerückgewinnungsdampferzeuger (9) und einen Abgasteiler (29) umfasst; wobei der Wärmerückgewinnungsdampferzeuger (9) dafür konfiguriert ist, die nutzbare Wärme aus dem durch ihn hindurchströmenden Abgasstrom (8) zu entnehmen; wobei stromabwärts des Wärmerückgewinnungsdampferzeugers (9) der Abgasteiler (29) die Abgase (19) des Gasturbinenkraftwerks (38) in einen ersten Abgasstrom (21) zur Rückführung in einen Einlassstrom der Gasturbine (6) und in einen zweiten Abgasstrom (20) zur Freisetzung in die Umgebung teilt; sowie ein Steuerelement (11, 29) zur Steuerung des ersten Abgasstroms (21) und einen Abgasnachkühler (27),
wobei wenigstens ein Sensor (40, 41, ..., 49) zum Messen der Konzentration einer Komponente des Einlassgases (3) und/oder des heißen Arbeitsgases und/oder des Abgases der Gasturbine (8, 19, 20, 21, 24) vorgesehen ist,
**dadurch gekennzeichnet, dass** die Steuervorrichtung (39) drei Steuerungsebenen zum Bestimmen einer Sollwertkonzentration (C_{c}) der einen Komponente umfasst, wobei die erste Steuerungsebene einen geschlossenen Regelkreis für die Sollwertkonzentration (C_{c}) der einen Komponente umfasst, die zweite Steuerungsebene eine Feedforward-Steuerung für die Sollwertkonzentration (C_{c}) der einen Komponente umfasst, und die dritte Steuerungsebene einen Rückführkreis umfasst, mit dem die Sollwerte der Feedforward-Steuerung gemäß dem tatsächlichen Betriebsverhalten des Gasturbinenkraftwerks korrigiert werden.

13. Gasturbinenkraftwerk (38) nach Anspruch 12, **dadurch gekennzeichnet, dass** die Steuervorrichtung (39) einen Block zum Bestimmen einer Sollwertkonzentration (C_{c}) und einen nachfolgenden Block zum Bestimmen einer Sollwertposition (R_{c}) des Steuerelements (11, 29) umfasst, wobei der Block zum Bestimmen der Sollwertposition (R_{c}) des Steuerelements (11, 29) mit dem Ausgangssignal des Blocks zum Bestimmen der Sollwertkonzentration (C_{c}) verbunden ist und wenigstens eine Messeinrichtung (41, 42, ..., 49) eines Betriebsparameters des Gasturbinenkraftwerks (38) und/oder eine Online-Messeinrichtung der Brennstoffzusammensetzung umfasst, wobei diese Messeinrichtung mit der Steuervorrichtung (39) verbunden ist.

14. Gasturbinenkraftwerk (38) nach Anspruch 12 oder 13, **dadurch gekennzeichnet, dass** es eine Pulsationsmesseinrichtung (50, 51) in einer Brennkammer (4, 34) umfasst, die mit der Steuervorrichtung (39) verbunden ist.

## Revendications

1. Procédé d'actionnement d'une centrale à turbine à gaz (38) avec une recirculation des gaz d'échappement, qui comprend une turbine à gaz (6), un contrôleur (39), un générateur de vapeur à récupération de chaleur (9) et un séparateur des gaz d'échappement (29) ; où le générateur de vapeur à récupération de chaleur (9) est configuré pour retirer la chaleur utilisable du flux des gaz d'échappement (8) qui le traversent ; en aval du générateur de vapeur à récupération de chaleur (9), le séparateur des gaz d'échappement (29) sépare les gaz d'échappement (8, 19) de la centrale à turbine à gaz en un premier flux partiel de gaz d'échappement (21) pour une recirculation dans un flux d'entrée de la turbine à gaz (6), et en un second flux partiel de gaz d'échappement (20, 24) pour une libération dans l'environnement, et un élément de commande (11, 29) destiné à commander le premier flux de gaz d'échappement (21), et un refroidisseur des gaz d'échappement (27), où une concentration de point de consigne d'un composant (Cc) des gaz d'entrée (3) et / ou des gaz d'échappement de la turbine à gaz (8, 19, 20, 21, 24), est déterminée dans une première étape selon les conditions de fonctionnement de la turbine à gaz (6), la position de l'élément de commande (11, 29) est réglé dans une deuxième étape selon l'écart de concentration de composant point de consigne / réelle,
**caractérisé en ce que** la concentration de point de consigne du composant (Cc) est déterminée à partir de la valeur point de consigne de la concentration d'un composant gazeux (Ccl) à partir d'une boucle commande d'une variable opérationnelle concernant la combustion dans la turbine à gaz (6), d'une valeur de commande de réaction positive de la concentration de point de consigne du composant gazeux (Cmap), et d'une valeur de correction de la concentration de point de consigne (Ccor) du composant gazeux.

2. Procédé selon la revendication 1, **caractérisé en ce que** la concentration de point de consigne (Ccl) du composant des gaz d'entrée (3) et / ou des gaz d'échappement de la turbine à gaz (8, 19, 20, 21, 24), est déterminée dans la boucle de commande fermée selon une ou plusieurs des variables opérationnelles suivantes concernant la combustion dans la turbine à gaz (6), à savoir :
les pulsations de la chambre de combustion, les émissions de NOx, les hydrocarbures non brûlés (UHC), la concentration mesurée du composant dans les gaz d'entrée (3) et / ou dans les gaz d'échappement (8, 19, 20, 21, 24) de la turbine à gaz (6), et / ou le rapport du carbone sur l'hydrogène dans le combustible (5).

3. Procédé selon la revendication 1 ou 2, **caractérisé en ce que** la valeur de point de consigne de l'élément de commande (Rc), est déterminée à partir d'une valeur de point de consigne d'une boucle de commande fermée (Rcl) de l'élément de commande (11, 29), d'une valeur de commande de réaction positive de la valeur de point de consigne de l'élément de commande (Rmap) afin de commander le premier flux de gaz d'échappement recirculé et d'une valeur de correction (Rcor) de la valeur de point de consigne de l'élément de commande (11, 29).

4. Procédé selon l'une quelconque des revendications 1 à 3, **caractérisé en ce que** la valeur de point de consigne de l'élément de commande (Rcl), est déterminée dans la boucle de commande fermée selon un ou plusieurs des éléments suivants :
le taux de recirculation des gaz d'échappement, le flux d'entrée du compresseur (3), le flux d'air ambiant (2) et le flux des gaz d'échappement (8, 19, 20, 21, 24).

5. Procédé selon l'une quelconque des revendications 1 à 4, **caractérisé en ce que** l'une au moins des valeurs de commande de réaction positive de la concentration point de consigne (Cmap) et de la valeur de point de consigne de l'élément de commande (Rmap), et / ou l'une au moins des valeurs de correction de la concentration de point de consigne (Ccor) et de la valeur de point de consigne de l'élément de commande (Rcor), est stockée en valeurs discrètes dans une matrice, et une interpolation est exécutée entre ces valeurs.

6. Procédé selon l'une quelconque des revendications 1 à 5, **caractérisé en ce qu'**une caractéristique de fonctionnement de la commande de réaction positive de la concentration de point de consigne (Cmap) et / ou de la valeur de point de consigne de l'élément de commande (Rmap) est prédéterminée, et cette caractéristique de fonctionnement est décalée d'une valeur de correction de la concentration de point de consigne (Ccor) et / ou d'une valeur de correction de la valeur de point de consigne (Rcor).

7. Procédé selon la revendications 6, **caractérisé en ce que** la pente de la caractéristique de fonctionnement de la commande de réaction positive de la concentration de point de consigne (Cmap) et / ou de la valeur de point de consigne de l'élément de commande (Rmap), est adaptée au moyen d'une valeur de correction de la concentration de point de consigne (Ccor) et / ou d'une valeur de correction de la valeur de point de consigne (Rcor).

8. Procédé selon la revendications 6 ou 7, **caractérisé en ce que** la forme de la caractéristique de fonctionnement de la commande de réaction positive de la concentration de point de consigne (Cmap) et / ou de la valeur de point de consigne de l'élément de commande (Rmap), est adaptée au moyen d'une valeur de correction de la concentration de point de consigne (Ccor) et / ou d'une valeur de correction de la valeur de point de consigne (Rcor).

9. Procédé selon l'une quelconque des revendications 1 à 8, **caractérisé en ce que** la valeur de correction de la concentration de point de consigne (Ccor) et / ou la valeur de correction de la valeur de point de consigne de l'élément de commande (Rcor), est formée selon les écarts de commande passés.

10. Procédé selon l'une quelconque des revendications 1 à 9, **caractérisé en ce que** la concentration en CO2 et / ou la concentration en oxygène des gaz d'entrée (3) et / ou des gaz d'échappement de la turbine à gaz (8, 19, 20, 21, 24), sont utilisées en tant que variable commandée.

11. Procédé selon l'une quelconque des revendications 1 à 10, **caractérisé en ce que**, avant d'être libéré dans l'environnement, le deuxième flux de gaz d'échappement (20) est envoyé à un système d'élimination du dioxyde de carbone (18), les gaz d'échappement (22) pauvres en dioxyde de carbone sont libérés dans l'environnement par ledit système d'élimination du dioxyde de carbone (18), et le dioxyde de carbone (31) est retiré pour une utilisation ultérieure.

12. Centrale à turbine à gaz (38) avec une recirculation des gaz d'échappement, qui comprend une turbine à gaz (6), un contrôleur (39), un générateur de vapeur à récupération de chaleur (9) et un séparateur des gaz d'échappement (29) ; où le générateur de vapeur à récupération de chaleur (9) est configuré pour retirer la chaleur utilisable du flux des gaz d'échappement (8) qui le traversent ; en aval du générateur de vapeur à récupération de chaleur (9), le séparateur des gaz d'échappement (29) sépare les gaz d'échappement (19) de la centrale à turbine à gaz (38) en un premier flux de gaz d'échappement (21) pour une recirculation dans un flux d'entrée de la turbine à gaz (6), et en un second flux de gaz d'échappement (20) pour une libération dans l'environnement, et un élément de commande (11, 29) destiné à commander le premier flux de gaz d'échappement (21), et un refroidisseur des gaz d'échappement (27),
où est fourni un capteur (40, 41, ... , 49) au moins, destiné à mesurer la concentration d'un composant des gaz d'entrée (3) et / ou des gaz de fonctionnement chauds et / ou des gaz d'échappement de la turbine à gaz (8, 19, 20, 21, 24),
**caractérisé en ce que** le contrôleur (39) comprend trois niveaux de contrôleur afin de déterminer une concentration de point de consigne (Cc) du composant, où le premier niveau de contrôleur comprend une boucle de commande fermée de la concentration de point de consigne (Cc) du composant, le deuxième niveau de contrôleur comprend une commande de réaction positive de la concentration de point de consigne (Cc) du composant, et le troisième niveau de contrôleur comprend un circuit de rétroaction, au moyen desquels les valeurs de point de consigne de la commande de réaction positive sont corrigées selon le comportement opérationnel réel de la centrale à turbine à gaz.

13. Centrale à turbine à gaz (38) selon la revendication 12, **caractérisée en ce que** le contrôleur (39) comprend un bloc destiné à déterminer une concentration de point de consigne (Cc), et un bloc suivant pour déterminer une position de point de consigne (Rc) de l'élément de commande (11, 29), où le bloc destiné à déterminer la position de point de consigne (Rc) de l'élément de commande (11, 29) est connecté au signal de sortie du bloc destiné à déterminer la concentration de point de consigne (Cc), et comprend au moins une mesure (41, 42, ... , 49) d'un paramètre opérationnel de la centrale à turbine à gaz (38), et / ou une mesure en ligne de la composition du combustible, et cette mesure est connectée au contrôleur (39).

14. Centrale à turbine à gaz (38) selon la revendication 12 ou 13, **caractérisée en ce qu'**elle comprend une mesure des pulsations (50, 51) dans une chambre de combustion (4, 34), qui est connectée au contrôleur (39).
